# EUROPÄISCHE PATENTSCHRIFT

(11) **EP 1 116 641 B1**
(45) Veröffentlichungstag und Bekanntmachung des Hinweises auf die Patenterteilung: **18.10.2006**
(21) Anmeldenummer: 01100471.0
(22) Anmeldetag: 09.01.2001
(51) Int. Cl.: B62D 25/08, B62D 25/20

(54) **Karosserievorderbau für ein Kraftfahrzeug**
Front structure for a motor vehicle
Structure avant de véhicule automobile

(30) Priorität: 13.01.2000 DE 10001102
(43) Veröffentlichungstag der Anmeldung: 18.07.2001
(73) Patentinhaber: ADAM OPEL AG, 65423 Rüsselsheim (DE)
(72) Erfinder: Meinhardt, Klaus, 64560 Riedstadt (DE); Hallik, Matthias, Dipl.-Ing., 65207 Wiesbaden (DE)
(74) Vertreter: Daniel, Ulrich W.P.

(56) Entgegenhaltungen:
- EP-A- 0 908 371
- US-A- 4 804 222

## Beschreibung

Die Erfindung betrifft einen Karosserievorderbau für ein Kraftfahrzeug mit einer an einem Bodenblech befestigten Stirnwand einer Fahrgastzelle, wobei die Stirnwand im Bereich des Radhauses nach innen gewölbt und vor dieser in Fahrtrichtung ein erster Abschnitt eines Verstärkungsbleches angeordnet ist und sich die Stirnwand mit einem Seitenabschnitt zur Ausbildung eines Innenabschnittes einer Scharnier-A-Säule im Wesentlichen in Längsrichtung erstreckt und der Seitenabschnitt der Stirnwand mit einem im Wesentlichen zu diesem quer verlaufenden Stirnwandabschnitt und an seinem Fuß mit einem Seitenschwellerprofil verbunden ist, sowie mit den weiteren Merkmalen des Anspruches 1.

Ein Karosserievorderbau mit den explizit genannten Merkmalen ist beispielsweise in der DE 196 00 460 A1 beschrieben. Um bei einem Frontalcrash oder einem Offsetcrash zu verhindern, dass das Vorderrad die Stirnwand in die Fahrgastzelle hineindrückt und Fahrzeuginsassen gefährdet werden, wird ein Verstärkungsblech im Form eines hinteren Radeinbauprofils vor der Stirnwand angeordnet. Weiterhin kann der Karosserievorderbau nach dem genannten Stand der Technik zum Schutz der Fahrgastzelle bei einem Seitencrash ein Stabilisierungsprofil in einem äußeren Längsträgerglied eines unterhalb des Bodenbleches angeordneten Längsträgers aufweisen.

Um eine noch größere Schutzwirkung der Fahrgastzelle bei einem Crash durch eine weiter verbesserte Stabilität des Vorderbaus und durch eine definierte Weiterleitung der bei einem Unfall insbesondere an der Stirnwand auftretenden Kräfte in verformbare und damit energieaufnehmende Abschnitte des Karosserievorderbaus zu erreichen, wird vorgesehen, dass sich das Verstärkungsblech neben dem ersten Abschnitt vor der Stirnwand mit einem zweiten Abschnitt im Wesentlichen horizontal unter dem Bodenblech erstreckt und das Verstärkungsblech mit dem Seitenabschnitt, dem dazu im Wesentlichen quer verlaufenden Abschnitt der Stirnwand sowie mit dem Seitenschwellerprofil jeweils direkt oder indirekt verbunden ist. Unter einer indirekten Verbindung von zwei Blecheinzelteilen ist erfindungsgemäß eine Verbindung unter Vermittlung eines dritten Teils zu verstehen, welches zwischen den zu verbindenden Blecheinzelteilen angeordnet und mit diesen Teilen verbunden ist.

Dadurch, dass sich das Verstärkungsblech von der Stirnwand bis unter das Bodenblech erstreckt, erhöht sich insbesondere im Übergangsbereich zwischen dem Boden und der Stirnwand der Fahrgastzelle die Stabilität des Karosserievorderbaus, insbesondere gegen ein Eindrücken der Stirnwand durch ein Rad. Durch die Befestigung des Verstärkungsbleches an dem Seitenabschnitt der Stirnwand, dem dazu im Wesentlichen quer verlaufenden Abschnitt der Stirnwand und an dem Seitenschwellerprofil wird ein Knoten ausgebildet, von welchem bei einem Crash die auf das Verstärkungsblech einwirkenden Kräfte sowohl in den als Innenabschnitt einer Scharnier-A-Säule ausgebildeten Seitenabschnitt der Stirnwand als auch in das Profil des Seitenschwellers eingeleitet werden, wobei der im Wesentlichen quer verlaufende Abschnitt der Stirnwand eine zusätzliche Stützfunktion ausübt. Die Anordnung des Verstärkungsbleches im Bereich, in welchem i. d. R. die Stirnwand an das Bodenblech angeschweißt ist, schützt weiterhin die Verbindungsstelle von Stirnwand und Bodenblech nicht nur gegen mögliche mechanische Einwirkungen bei einem Unfall, sondern auch gegen Korrosion und wirkt weiterhin schallisolierend.

Der Lastpfad vom Verstärkungsblech in den Seitenschweller hinein ist besonders gut ausgebildet, wenn sich das Verstärkungsblech seitlich bis unter das Seitenschwellerprofil erstreckt. In beiden Fällen kann das Verstärkungsblech über die gesamte Länge seiner horizontalen Ausdehnung des zweiten Abschnitts in Fahrzeuglängsrichtung am Seitenschwellerprofil befestigt werden und einerseits in diesem Abschnitt das Schwellerprofil bei einem Seitencrash abstützen und andererseits Seitenkräfte von der Stirnwand in den Schweller einleiten.

Die Stabilität der Fahrgastzelle gegen ein Eindringen des Rades bei einem Unfall ist besonders hoch, wenn das Verstärkungsblech auf der nach außen gerichteten Seite einen im Wesentlichen horizontal in Längsrichtung verlaufenden Flansch aufweist, da in diesem Fall das Schwellerprofil mit seiner Längsachse zum horizontal verlaufenden Flansch ausgerichtet und an diesem indirekt befestigt werden kann. Schließt sich senkrecht am vorderen Ende des horizontalen Flansches des Verstärkungsblechs ein im Wesentlichen vertikal verlaufender Flansch an, kann zusätzlich das Schwellerprofil mit seiner Stirnfläche mit diesem vertikalen Flansch des Verstärkungsbleches zur direkten oder indirekten Anlage gebracht und verbunden werden. Damit kann eine direkt von vorn auf das Verstärkungsblech einwirkende Kraft zentral, d. h. parallel zur Schwellerachse in das Schwellerprofil eingeleitet werden.
Ein Karosserievorderbau mit den bisher genannten Merkmalen ist in der EP 0 908 371 beschrieben.

Die Erfindung beruht auf dem Problem, den Zusammenbau des Karosserievorderbaus zu vereinfachen.
Dazu sieht die Erfindung vor, dass zwischen dem Schwellerprofil und dem Verstärkungsblech ein sogenanntes Schließblech angeordnet ist, das zu den beiden senkrecht zueinander verlaufenden Flanschen des Verstärkungsbleches, beispielsweise mittels zwei entsprechend geformten und angeordneten Anlage- bzw. Flanschflächen komplementär ausgebildet ist. Das Schließblech ist auf den Flanschen des Verstärkungsbleches horizontal verschieblich, womit eine Anlageoptimierung der Teile des Karosserievorderbaus ermöglicht wird, um die Auswirkungen von Herstellungsschwankungen der Bauteileabmessungen und Toleranzen bei den Schweißarbeiten zu kompensieren.

Zur Bereitstellung eines Flansches zum Verbinden des Schließbleches mit dem Seitenteil und dem dazu im Wesentlichen quer verlaufenden Abschnitt der Stirnwand weist das Schließblech auf der Innenseite eine zu den Anlageflächen senkrechte Wand auf.

Der Vorteil des Schließbleches liegt weiterhin darin, dass es zur Trockenlegung der Scharnier-A-Säule dient, da es das Eindringen von Feuchtigkeit in den Fuß der Scharnier-A-Säule verhindert.

Die vorteilhaften Eigenschaften des beschriebenen Schließbleches können auch dadurch erreicht werden, dass der Fuß des Seitenabschnitts der Stirnwand entsprechend dem beschriebenen Schließblech ausgebildet wird, was zwar einerseits eine aufwendigere Herstellung des Seitenteils zur Folge hat, aber andererseits die Anzahl der für den erfindungsgemäßen Karosserievorderbau benötigten Bauteile und den Verbindungsaufwand zwischen den Bauteilen verringert.

Um Gewicht einzusparen, kann sich das Verstärkungsblech jeweils von einer Fahrzeugseite in Querrichtung bis zu einer vorgegebenen Breite erstrecken, die beispielsweise durch die Abmessung des Radkastens in Fahrzeugquerrichtung bestimmt sein kann.

Zur Bereitstellung eines möglichst homogenen und kraftschlüssigen Überganges vom Seitenschwellerprofil zum Seitenteil der Stirnwand kann das Seitenschwellerprofil als ein Mehrkantprofil ausgebildet sein, an welchem der am Fuß komplementär ausgebildete Seitenabschnitt mit diesem an der Stirnwand anliegt und befestigt ist.

Zur Abstützung des Verstärkungsbleches am Boden des Kraftfahrzeuges kann der unter dem Bodenblech verlaufende zweite Abschnitt des Verstärkungsbleches an seinem hinteren Ende in Querrichtung und an seiner Innenseite in Längsrichtung jeweils einen Flansch aufweisen, der zum Befestigen des Verstärkungsbleches am Bodenblech dient.

Eine hohe Stabilität des erfindungsgemäßen Karosserievorderbaus zum Schutz der Fahrgastzelle insbesondere bei einem Seitencrash wird erfindungsgemäß dadurch erreicht, dass auf jeder Fahrzeugseite ein Längsträger angeordnet ist, der sich im Bereich des Vorderbaus unterhalb des Bodenblechs jeweils in ein inneres und ein äußeres Längsträgerglied aufgabelt, wobei sich das Verstärkungsblech als Stabilisierungselement zumindest zwischen innerem und äußerem Längsträgerglied erstreckt und an diesen befestigt ist und somit beide Glieder gegeneinander abstützt.

Die Erfindung wird im Folgenden durch das Beschreiben einiger Ausführungsformen unter Bezugnahme auf die Zeichnungen erläutert, wobei
- Fig. 1:: einen Ausschnitt eines vorderen linken Bereichs eines erfindungsgemäßen Karosserievorderbaus eines Kraftfahrzeuges,
- Fig. 2:: die Einzelblechteile des in Fig. 1 dargestellten Karosserievorderbaus in einer Explosionszeichnung für eine erste Zusammenbaufolge, und
- Fig. 3:: die Einzelblechteile des in Fig. 1 dargestellten Karosserievorderbaus in einer Explosionszeichnung für eine zweite Zusammenbaufolge zeigt.

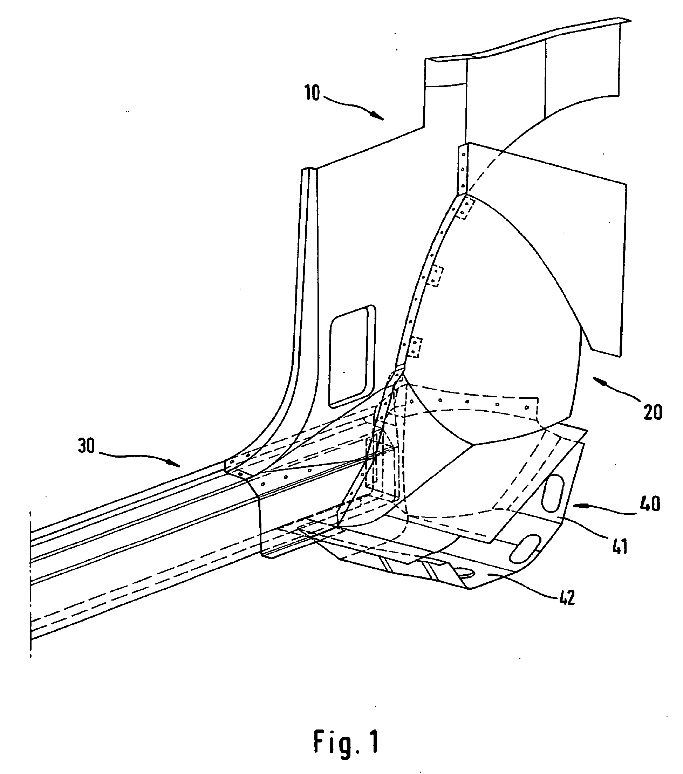

In Fig. 1 ist ein vorderer linker Bereich eines erfindungsgemäßen Karosserievorderbaus eines Kraftfahrzeuges dargestellt. Die Stirnwand, welche eine Fahrgastzelle vom Motorraum trennt, erstreckt sich mit einem Seitenabschnitt 10 zur Ausbildung eines Innenabschnittes einer Scharnier-A-Säule in Fahrzeuglängsrichtung. An diesem Seitenabschnitt 10 ist ein im Wesentlichen quer verlaufender Stirnwandabschnitt 20 angeschweißt, welcher sich im Bereich des Radhauses in die Fahrgastzelle hineinwölbt, wobei sich der Seitenabschnitt der Stirnwand 10 in Längsrichtung über den in Fahrzeugquerrichtung verlaufenden Abschnitt 20 der Stirnwand hinaus erstreckt. Dieser Seitenabschnitt 10 ist mit seinem Fuß an einem Seitenschwellerprofil 30 angeschweißt. Die Stirnwand ist im Bereich des Bodens der Fahrgastzelle mit einem nicht dargestellten Bodenblech verschweißt. Von der Fahrgastzelle gesehen, unterhalb des Bodenbleches und der Stirnwand, ist ein Verstärkungsblech 40 angeordnet. Dieses Verstärkungsblech verläuft mit einem ersten Abschnitt 41 komplementär unterhalb dem quer verlaufenden Stirnwandabschnittes 20. Mit einem zweiten Abschnitt 42 erstreckt sich das Verstärkungsblech 40 horizontal unter dem nicht dargestellten Bodenblech. Im Überlappungsbereich bilden die Abschnitte 41 und 42 des Verstärkungsbleches mit dem nicht dargestellten Bodenblech und dem im Wesentlichen quer verlaufenden Stirnwandabschnittes 20 eine Doppelwandstruktur. Das Verstärkungsblech 40 ist mit dem Seitenabschnitt 10, dem dazu im Wesentlichen quer verlaufenden Abschnitt 20 der Stirnwand und mit dem Seitenschwellerprofil 30 jeweils direkt oder indirekt zur Ausbildung definierter Lastpfade verbunden.

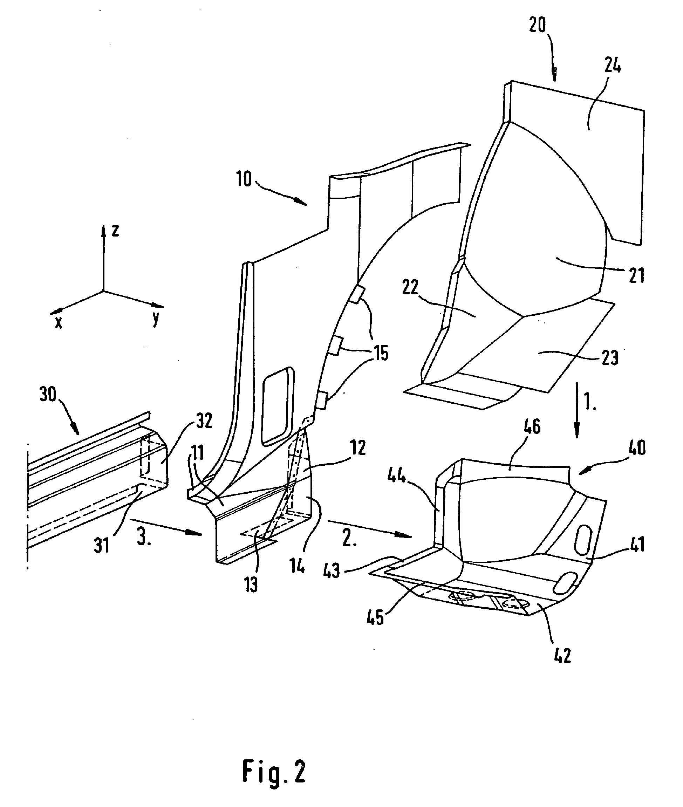

Zur Verdeutlichung des Aufbaus des erfindungsgemäßen Karosserievorderbaus wird im Folgenden auf Fig. 2 Bezug genommen, welche die Einzelblechteile des in Fig. 1 dargestellten Karosserievorderbaus in einer Explosionszeichnung für eine erste Zusammenbaufolge zeigt. Die mit 1., 2. bzw. 3. bezeichneten Bezugszeichnen kennzeichnen dabei die verschiedenen wesentlichen Schritte des Zusammenbaus.

Ausgangspunkt ist ein Verstärkungsblech 40, welches am nicht dargestellten Unterbau angeschweißt wird. Das Verstärkungsblech besteht aus zwei ineinander übergehende Abschnitte 41 und 42. Der Abschnitt 41 ist komplementär zur quer verlaufenden Stirnwand 20 im Überlappungsbereich ausgebildet. So weist beispielsweise das Verstärkungsblech im ersten Abschnitt einen Bereich auf, welcher wie der Abschnitt 21 des Stirnwandteils 20 nach innen gewölbt ist oder einen Abschnitt, welcher sich wie der Abschnitt 23 des Stirnwandteils 20 in einem vorgegebenen Winkel zum Boden nach oben erstreckt. An seiner Außenseite besitzt der Abschnitt 41 des Verstärkungsbleches einen vertikal verlaufenden Flansch 44. Der zweite Abschnitt 42 verläuft im Wesentlichen horizontal, d. h. parallel unter dem nicht dargestellten Bodenblech der Fahrgastzelle. An der Außenseite weist dieser horizontale Abschnitt 42 einen horizontal verlaufenden Flansch 43 auf. Beide Flansche 44, 43 liegen demnach senkrecht zueinander, laufen aufeinander zu und bilden einen rechten Winkel. Beim Zusammenbau der Einzelblechteile wird zuerst das im Wesentlichen quer verlaufende Stirnwandteil 20, auf das Verstärkungsblech aufgesetzt und entlang des Flansches 46 des Verstärkungsbleches mit diesem verschweißt.

Dieses im Wesentlichen quer verlaufende Stirnwandteil 20 setzt sich aus einem kleinen Seitenabschnitt 22, dem nach innen gewölbten Abschnitt 21 im Bereich des Radhauses, dem vom Boden schräg nach oben verlaufenden Abschnitt 23 und aus einem quer verlaufenden Stirnwandabschnitt 24 zusammen.

Bei der Anlage des Stirnwandteils 20 an das Verstärkungsblech wird eine Anlageoptimierung in y-Richtung durchgeführt.

Je nach Ausführungsform der Erfindung kann der Seitenabschnitt 10 der Stirnwand an seinem Fuß mit den vertikal und horizontal verlaufenden Flanschen 44 und 43 des Verstärkungsbleches zugeordneten Anlageflächen 12 und 13 ausgebildet sein oder in einem Zwischenschritt ein entsprechend ausgebildetes Schließblech an den Seitenabschnitt 10 der Stirnwand angeschweißt werden. Das Seitenteil der Stirnwand wird von außen auf das Verstärkungsblech so aufgesetzt, dass die horizontale bzw. vertikale Anlagefläche 13, 12 auf dem zugeordneten horizontalen bzw. vertikalen Flansch 43, 44 des Verstärkungsbleches 40 zur Anlage kommt. Danach werden die Teile an ihren Anlageflächen bzw. Flanschen verschweißt. Senkrecht zu den Anlageflächen 12 und 13 weist das Seitenteil 10 der Stirnwand bzw. das angeschweißte Schließblech zur Fahrgastzelle eine senkrechte Anlagefläche 14 auf, welche an dem in Längsrichtung verlaufenden Abschnitt 22 des Stirnwandblechteils 20 anliegt und dort mit diesem verschweißt wird. Weiterhin wird das Seitenteil 10 der Stirnwand an den Flanschabschnitten 15 des Stirnwandblechteils 20 befestigt. Beim Anlegen des Seitenteils 10 der Stirnwand an das quer verlaufende Stirnwandblechteil 20 und das Verstärkungsblech 40 wird wiederum eine Anlageoptimierung in y-Richtung durchgeführt.

Zum Schluss wird das als U-Profil ausgeführte Schwellerprofil 30 zum horizontal verlaufenden Flansch des Verstärkungsbleches bzw. zur zugeordneten Anlagefläche des Seitenteils oder des Schließbleches ausgerichtet und bis zum Anschlag in Längsrichtung nach vorne geschoben. Je nach Ausführungsform der Erfindung kommt damit die Stirnfläche 32 des Seitenschwellerprofils 30 mit der Fläche 12 des Seitenteils 10, mit der zugeordneten Fläche des Schließbleches oder mit dem Flansch 44 des Verstärkungsbleches 40 direkt zur Anlage. Nach der Platzierung wird das Seitenschwellerprofil an den beschriebenen Anlageflächen verschweißt. Weiterhin ist das Seitenteil 10 mit ebenen Flächenabschnitten 11 komplementär zum als Mehrkantprofil ausgebildeten Seitenschwellerprofil 30 ausgeführt und mit dem Schwellerprofil an diesen Flächen 11 verschweißt. Die verbundenen Einzelblechteile des erfindungsgemäßen Karosserievorderbaus bilden auf diese Weise im Bereich der senkrecht zueinander liegenden Flächen 12 und 13 des Seitenteils 10 einen optimierten Lastknoten, mit welchem auf das Verstärkungsblech 40 einwirkende Kräfte sowohl in das Seitenteil 10 der Stirnwand als auch in das Seitenschwellerprofil 30 eingeleitet werden können, wobei der quer verlaufende Abschnitt der Stirnwand 20 eine zusätzliche Stützfunktionen für das Verstärkungsblech und damit die Stirnwand ausübt.

Zur weiteren Stabilisierung der Fahrgastzelle weist das Verstärkungsblech im zweiten Abschnitt 42 im hinteren Bereich einen quer verlaufenden Flansch 45 und senkrecht dazu, auf der dem Flansch 43 gegenüberliegenden Seite zur Fahrzeugmitte hin einen weiteren, in Fig. 2 nicht dargestellten längsverlaufenden Flansch auf, die beide mit dem Bodenblech verschweißt sind, so dass auch das Bodenblech für das Verstärkungsblech und die Stirnwand eine zusätzliche Stützfunktionen besitzt.

In einer weiteren, nicht gezeigten Ausführungsform der Erfindung, umfasst der erfindungsgemäße Karosserievorderbau auf jeder Fahrzeugseite einen Längsträger, welcher sich unterhalb des Bodenblechs in ein inneres und ein äußeres Längsträgerglied aufgabelt, wobei das äußere Längsträgerglied mit dem Seitenschwellerprofil verbunden ist. Das Verstärkungsblech erstreckt sich mit seinem zweiten Abschnitt in Querrichtung vom äußeren bis zum inneren Längsträgerglied und ist mit beiden verschweißt.

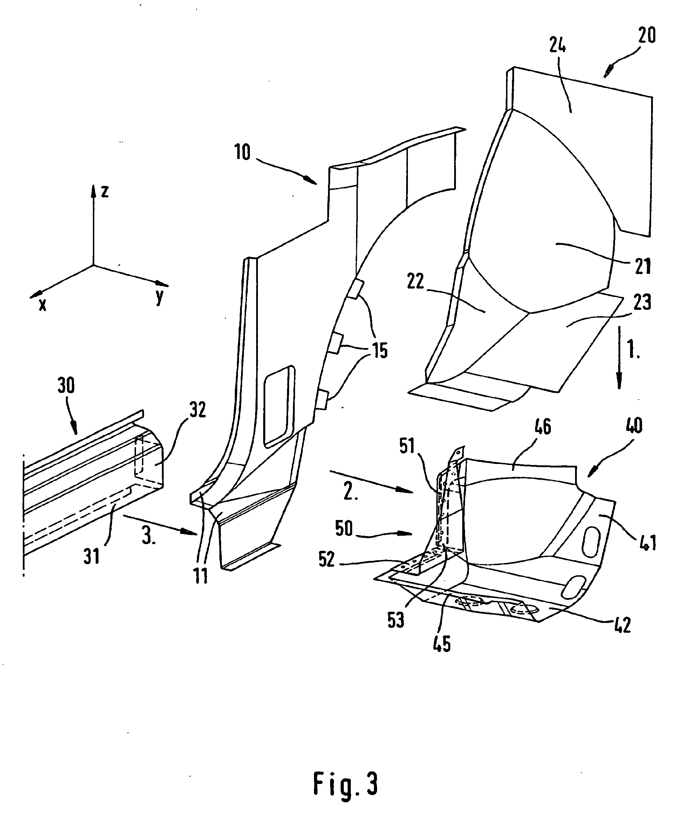

Fig. 3 zeigt die Einzelblechteile des in Fig. 1 dargestellten Karosserievorderbaus in einer Explosionszeichnung für eine zweite Zusammenbauweise. Im Gegensatz zur in Fig. 2 dargestellten Zusammenbaufolge wird zuerst das Schließblech 50 mit den senkrecht zueinander verlaufenden Flanschen 52, 51 und der Anlage- und Befestigungsfläche 53 auf das Verstärkungsblech aufgeschweißt, womit eine Anlageoptimierung, d.h. eine Verschiebbarkeit für die Montage der dargestellten Einzelblechteile in x-Richtung ermöglicht wird. Danach wird der im Wesentlichen quer verlaufende Abschnitt 20 der Stirnwand an das Verstärkungsblech und das Schließblech angeschweißt und daraufhin das Seitenteil 10 der Stirnwand angebracht. Zum Schluss wird wieder das Seitenschwellerprofil 30 wie vorstehend beschrieben mit den anderen Einzelblechteilen verbunden. Der zusammengebaute erfindungsgemäße Karosserievorderbau ist demnach identisch mit dem in Fig. 1 gezeigten.

## Patentansprüche

1. Karosserievorderbau für ein Kraftfahrzeug mit einer an einem Bodenblech befestigten Stirnwand einer Fahrgastzelle, wobei die Stirnwand (10, 20) im Bereich eines Radhauses nach innen gewölbt ist und vor dieser in Fahrtrichtung betrachtet ein erster Abschnitt (41) eines Verstärkungsbleches (40) angeordnet ist und sich die Stirnwand mit einem Seitenabschnitt (10) zur Ausbildung eines Innenabschnittes einer Scharnier-A-Säule im Wesentlichen in Längsrichtung erstreckt und der Seitenabschnitt (10) der Stirnwand mit einem im Wesentlichen zu diesem quer verlaufenden Stirnwandabschnitt (20) und an seinem Fuß zumindest mit einem Seitenschwellerprofil (30) verbunden ist, wobei das Verstärkungsblech (40) sich mit einem zweiten Abschnitt (42) im Wesentlichen horizontal unter dem Bodenblech erstreckt und mit dem Seitenabschnitt (10), dem dazu quer verlaufenden Abschnitt (20) der Stirnwand und mit dem Seitenschwellerprofil (30) jeweils direkt oder indirekt verbunden ist und wobei sich das Verstärkungsblech (40) seitlich bis unter das Seitenschwellerprofil (30) erstreckt und auf der nach außen gerichteten Seite im zweiten Abschnitt (42) einen im Wesentlichen horizontal in Längsrichtung verlaufenden Flansch (43) aufweist, an dessen vorderem Ende sich ein im Wesentlichen vertikal verlaufender Flansch (44) des ersten Abschnittes (41) anschließt, wobei das Schwellerprofil (30) mit seiner Unterseite (31) am horizontalen Flansch (43) ausgerichtet ist, an diesem indirekt anliegt und befestigt ist und sich mit seiner Stirnfläche (32) bis etwa an den vertikalen Flansch (44) erstreckt, **dadurch gekennzeichnet, dass** zwischen dem Seitenschwellerprofil (30) und dem Verstärkungsblech (40) ein Schließblech (50) angeordnet ist, das mit Anlageflächen (51, 52) zum Anlegen an den vertikalen und den horizontalen Flansch (44, 43) des Verstärkungsblech ausgebildet und an diesen befestigt ist und auf der Innenseite eine zu den Anlageflächen (51, 52) im Wesentlichen senkrechte Wand (53) aufweist, an welcher der Seitenabschnitt (10) und/oder der zum Seitenabschnitt quer verlaufende Abschnitt (20) der Stirnwand befestigt sind.

2. Karosserievorderbau nach Anspruch 1, **dadurch gekennzeichnet, dass** der Seitenabschnitt (10) der Stirnwand an seinem Fuß mit Flanschen (12, 13) zur Anlage und Befestigung an den vertikalen und den horizontalen Flansch (44, 43) des Verstärkungsblechs (40) ausgebildet ist und auf der Innenseite eine zu den Anlageflächen im Wesentlichen senkrechte Wand (14) aufweist.

3. Karosserievorderbau nach einem der Ansprüche 1 bis 2, **dadurch gekennzeichnet**, der erste Abschnitt (41) des Verstärkungsbleches (40) unter der Stirnwand insbesondere im Bereich (21) der Innenwölbung der Stirnwand komplementär zu dieser ausgebildet ist.

4. Karosserievorderbau nach einem der Ansprüche 1 bis 3, **dadurch gekennzeichnet, dass** sich das Verstärkungsblech (40) jeweils von einer Fahrzeugseite in Querrichtung bis zu einer vorgegebenen Breite erstreckt, die zumindest gleich der Querausdehnung des Bereichs (21) der Innenwölbung der Stirnwand ist.

5. Karosserievorderbau nach einem der Ansprüche 1 bis 4, **dadurch gekennzeichnet, dass** das Seitenschwellerprofil (30) ein Mehrkantprofil ist, an welchem der am Fuß komplementär ausgebildete Seitenabschnitt (10) der Stirnwand anliegt und befestigt ist.

6. Karosserievorderbau nach einem der Ansprüche 1 bis 5, **dadurch gekennzeichnet, dass** der zweite Abschnitt (42) des Verstärkungsbleches (40) unter dem Bodenblech an seinem hinteren Ende in Fahrzeugquerrichtung und seiner Innenseite in Fahrzeuglängsrichtung jeweils einen Flansch (45) aufweist, mit welchem das Verstärkungsblech (40) am Bodenblech befestigt ist.

7. Karosserievorderbau nach Anspruch 1, **dadurch gekennzeichnet, dass** das Schließblech (50) mit zumindest einem horizontalen und einem vertikalen Flansch (52, 51) ausgebildet ist, so dass beim jeweiligen Anlegen des Schwellerprofils (30), des Innenabschnitts (10) der Scharnier-A-Säule, des zu diesem im Wesentlichen quer verlaufenden Stirnwandabschnitts (20) und/oder des Verstärkungsblechs (40) an das Schließblech (50) eine Anlageoptimierung in Fahrzeuglängs- oder -querrichtung durchführbar ist.

8. Karosserievorderbau nach einem der Ansprüche 1 bis 7, **gekennzeichnet durch** einen auf jeder Fahrzeugseite angeordneten Längsträger, welcher sich unterhalb des Bodenblechs jeweils in ein inneres und ein äußeres Längsträgerglied aufgabelt, wobei das Verstärkungsblech (40) sich mit seinem zweiten Abschnitt (42) in Querrichtung zumindest vom äußeren zum inneren Längsträgerglied erstreckt und mit diesen verbunden ist.

## Claims

1. A frontal bodywork structure for a motor vehicle comprising a front wall of a passenger compartment which is fixed to a floor plate, wherein the front wall (10, 20) is curved inwardly in the region of a wheel housing and a first section (41) of a reinforcing plate (40) is arranged in front of said wall as seen in the direction of travel and a side section (10) of the front wall extends substantially in the longitudinal direction for forming an inner section of a hinge A-pillar and the side section (10) of the front wall is connected to a front wall section (20) running substantially transversely relative to said side section and is connected at its foot to at least one side sill-board profile (30), wherein a second section (42) of the reinforcing plate (40) extends substantially horizontally under the floor plate and the reinforcing plate is connected in each case directly or indirectly to the side section (10), to the section (20) of the front wall running transversely relative to said side section and to the side sill-board profile (30) and wherein the reinforcing plate (40) extends laterally to below the side sill-board profile (30) and, on the outwardly directed side of the second section (42) thereof, said reinforcing plate comprises a flange (43) which runs substantially horizontally in the longitudinal direction and is adjoined at the front end thereof by a substantially vertically running flange (44) of the first section (41), wherein the lower surface (31) of the sill-board profile (30) is aligned with the horizontal flange (43), rests indirectly thereon and is fixed thereto and the front surface (32) of said sill-board profile extends approximately up to the vertical flange (44), **characterized in that** a closure plate (50) is arranged between the side sill-board profile (30) and the reinforcing plate (40) and is formed with seating surfaces (51, 52) for seating on the vertical and the horizontal flange (44, 43) of the reinforcing plate and is fixed thereto and said closure plate comprises on the inner side a wall (53) which is substantially perpendicular to the seating surfaces (51, 52) and to which the side section (10) and/or the section (20) of the front wall running transversely with respect to said side section are fixed.

2. A frontal bodywork structure in accordance with Claim 1, **characterized in that** the side section (10) of the front wall is formed at the foot thereof with flanges (12, 13) for seating on and fixture to the vertical and the horizontal flange (44, 43) of the reinforcing plate (40) and comprises on the inner side a wall (14) which is substantially perpendicular to the seating surfaces.

3. A frontal bodywork structure in accordance with any of the Claims 1 to 2, **characterized in that** the first section (41) of the reinforcing plate (40) located below the front wall and especially in the region (21) of the inner curvature of the front wall is formed in complementary manner thereto.

4. A frontal bodywork structure in accordance with any of the Claims 1 to 3, **characterized in that** the reinforcing plate (40) extends in each case from one side of the vehicle in the transverse direction up to a given width which is at least equal to the transverse extent of the region (21) of the inner curvature of the front wall.

5. A frontal bodywork structure in accordance with any of the Claims 1 to 4, **characterized in that** the side sill-board profile (30) is a polygonal profile on which the side section (10) of the front wall, which is shaped in complementary manner to the foot, rests and to which it is fixed.

6. A frontal bodywork structure in accordance with any of the Claims 1 to 5, **characterized in that** the second section (42) of the reinforcing plate (40) below the floor plate at its rear end comprises a respective flange (45) in a direction transversely of the vehicle and in the longitudinal direction of the vehicle at the inner side thereof, the reinforcing plate (40) being fixed to the floor plate by means of said flange.

7. A frontal bodywork structure in accordance with Claim 1, **characterized in that** the closure plate (50) is formed with at least one horizontal and one vertical flange (52, 51) so that optimised positioning in the longitudinal or transverse direction of the vehicle can be effected when respectively seating the sill-board profile (30), the inner section (10) of the hinge A-pillar, the front wall section (20) running substantially transversely relative thereto and/or the reinforcing plate (40) on the closure plate (50).

8. A frontal bodywork structure in accordance with any of the Claims 1 to 7, **characterized by** a longitudinal member arranged on each side of the vehicle, and is forked below the floor plate so as to form an inner and an outer longitudinal member part in each case, wherein the second section (42) of the reinforcing plate (40) extends in the transverse direction at least from the outer to the inner longitudinal member part and is connected thereto.

## Revendications

1. Structure avant de carrosserie pour un véhicule automobile avec un tablier d'un habitacle de passagers fixé sur une tôle de fond, ledit tablier (10, 20) étant cintré vers l'intérieur au niveau d'un passage de roue, un premier segment (41) d'une tôle de renforcement (40) étant disposé devant lui dans le sens de la conduite, le tablier s'étendant sensiblement dans le sens longitudinal par un segment latéral (10) pour former un segment intérieur d'un montant à charnière en A, le segment latéral (10) du tablier étant raccordé à un segment de tablier (20) s'étendant sensiblement transversalement à lui et, à sa base, au moins à un profilé de bas de caisse (30), la tôle de renforcement (40) s'étendant par un deuxième segment (42) sensiblement horizontalement sous la tôle de fond, et étant directement ou indirectement raccordée selon le cas au segment latéral (10), au segment (20) du tablier s'étendant sensiblement transversalement à celui-ci et au profilé de bas de caisse (30), la tôle de renforcement (40) s'étendant latéralement jusque sous le profilé de bas de caisse (30), et présentant sur le côté dirigé vers l'extérieur du deuxième segment (42) une bride (43) s'étendant sensiblement horizontalement dans le sens longitudinal, à l'extrémité antérieure de laquelle est raccordée une bride (44) du premier segment (41), laquelle s'étend sensiblement verticalement, le profilé de bas de caisse (30) étant aligné sur la bride horizontale (43) par sa face inférieure (31), reposant et étant fixé indirectement sur celle-ci et s'étendant par sa surface frontale (32) jusqu'à peu près contre la bride verticale (44), **caractérisée en ce qu'**une tôle de fermeture (50) est disposée entre le profilé de bas de caisse (30) et la tôle de renforcement (40), conformée avec des surfaces d'appui (51, 52) pour reposer contre la bride verticale et la bride horizontale (44, 43) de la tôle de renforcement et fixée sur celle-ci, et présentant sur son côté intérieur une paroi (53) sensiblement perpendiculaire aux surfaces d'appui (51, 52), sur laquelle sont fixés le segment latéral (10) et/ou le segment du tablier 20 s'étendant sensiblement transversalement au segment latéral.

2. Structure avant de carrosserie selon la revendication 1, **caractérisée en ce que** le segment latéral (10) du tablier est conformé à sa base avec des brides (12, 13) pour l'appui et la fixation sur la bride verticale et la bride horizontale (44, 43) de la tôle de renforcement (40), et présente sur sa face intérieure une paroi (14) sensiblement perpendiculaire aux surfaces d'appui.

3. Structure avant de carrosserie selon l'une des revendications 1 à 2, **caractérisée en ce que** le premier segment (41) de la tôle de renforcement (40) est conformé complémentairement au tablier en dessous de celui-ci, en particulier dans la zone (21) du cintrage intérieur du tablier.

4. Structure avant de carrosserie selon l'une des revendications 1 à 3, **caractérisée en ce que** la tôle de renforcement (40) s'étend en direction transversale depuis un côté du véhicule jusqu'à une longueur définie, au moins égale à l'extension transversale de la zone (21) du cintrage intérieur du tablier.

5. Structure avant de carrosserie selon l'une des revendications 1 à 4, **caractérisée en ce que** le profilé de bas de caisse (30) est un profilé polygonal sur lequel repose et est fixé le segment latéral (10) du tablier conformé de manière complémentaire à la base.

6. Structure avant de carrosserie selon l'une des revendications 1 à 5, **caractérisée en ce que** le deuxième segment (42) de la tôle de renforcement (40) présente sous la tôle de fond, à son extrémité arrière dans le sens transversal du véhicule et sur sa face intérieure dans le sens longitudinal du véhicule, une bride (45) au moyen de laquelle la tôle de renforcement (40) est fixée sur la tôle de fond.

7. Structure avant de carrosserie selon la revendication 1, **caractérisée en ce que** la tôle de fermeture (50) est conformée avec au moins une bride horizontale et une bride verticale (52, 51), pour que, lors de la pose respective du profilé de bas de caisse (30), du segment intérieur (10) du montant à charnière en A, du segment de tablier (20) s'étendant sensiblement transversalement à celui-ci et/ou de la tôle de renforcement (40) sur la tôle de fermeture (50), une optimisation de pose soit réalisable dans le sens longitudinal ou dans le sens transversal du véhicule.

8. Structure avant de carrosserie selon l'une des revendications 1 à 7, **caractérisée par** un longeron disposé sur chaque côté du véhicule, se divisant en un élément intérieur et un élément extérieur de longeron en dessous de la tôle de fond, la tôle de renforcement (40) s'étendant en sens transversal par son deuxième segment (42), au moins du membre extérieur de longeron au membre intérieur de longeron, et étant raccordée à ceux-ci.
